# EUROPEAN PATENT SPECIFICATION

(11) **EP 0 384 403 B1**
(45) Date of publication and mention of the grant of the patent: **21.09.1994**
(21) Application number: 90103253.2
(22) Date of filing: 20.02.1990
(51) Int. Cl.: G09G 3/36

(54) **A method for controlling a multi-gradation display and a multi-gradation display device**
Steuermethode für Anzeigen mit Mehrfach-Farbabstufung und Anzeige mit Mehrfach-Farbabstufung
Méthode de contrôle d'un affichage à gradations multiples et dispositif d'affichage à gradations multiples

(30) Priority: 20.02.1989 JP 39725/89; 19.04.1989 JP 99114/89; 17.11.1989 JP 298842/89
(43) Date of publication of application: 29.08.1990
(73) Proprietor: SEIKO EPSON CORPORATION, Shinjuku-ku Tokyo-to (JP)
(72) Inventor: Kono, Masaru, c/o Seiko Epson Corporation, Suwa-shi, Nagano-ken (JP)
(74) Representative: Hoffmann, Eckart, Dipl.-Ing.

(56) References cited:
- EP-A- 0 193 728
- WO-A-84/03577
- WO-A-89/04505
- PATENT ABSTRACTS OF JAPAN vol. 13, no. 112 (P-844), 17 March 1989; & JP - A - 63287828 (HITACHI) 24.11.1988
- PATENT ABSTRACTS OF JAPAN vol. 12, no. 114 (P-688), 12 April 1988; & JP - A - 62244018 (SEINO EPSON) 24.10.1987

## Description

This invention relates to a multi-gradation display device for displaying images, as of letters, patterns, etc., and to a method of controlling it such as to obtain the display of images in multi-gradations by selectively turning on or not turning on a number of dots.

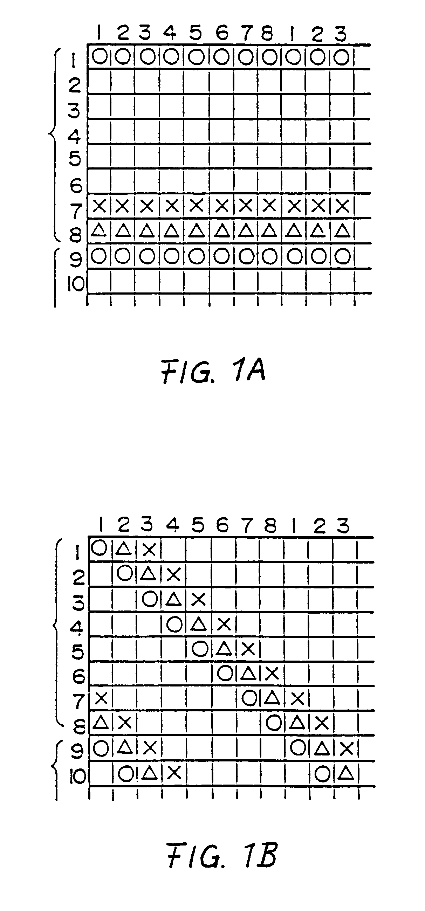

As one example of devices which can display images in multi-gradations liquid crystal displays (LCD) are known which are practically used as displays for televisions, personal computers, etc. In these LCDs, gradations are realized as described below. First, in order to display an image on a display panel in multi-gradations, different gradations are created by effecting a selected number of n dots (n: a natural number) in the horizontal direction of the display panel. The positions of these effective dots which are turned on or off depending on the data they receive , on the display panel are repeatedly changed from frame to frame with a period of a certain number of frames. Conventionally this period or the cycle of repetition is the same for every gradation. In other words, in an n dots x n dots effective dot matrix, effective dots are shifted vertically up or down, and horizontally right or left to thereby enable multi-gradation displays. This will be explained below with reference to Fig. 1.

First, an 8 dots x 8 dots effective matrix (submatrix) as shown in Figs. 1A and 1B is set on an LCD panel. In the example of Fig. 1A, in a first frame all the dots in the first horizontal row indicated by the circles become effective, in the second frame all the dots indicated by the triangles in the eighth horizontal row become effective, and in the third frame all the dots indicated by the crosses in the seventh horizontal row become effective. Accordingly the respective 8 x 8 = 64 dots become effective once from the first to the eighth frame, and the display can be in 1/8 gradation. In the example of Fig. 1B, the distributions of the effective dots in the respective frames are respective single oblique rows. In this example as well as the example of Fig. 1A, the display can be in 1/8 gradation.

But this prior art has a problem that when a gradation image occupies on an LCD panel a larger area than an n x n dot effective matrix, slight fringes occur, but when the former occupies a smaller area than the latter, the effective dots interfere with one another with the result that more conspicuous fringes occur. The fringes become especially conspicuous when a tiling pattern is made between different gradations. On the other hand, Tateuchi et al. describe in JP-A-287828/1988 an LCD driving method in which effective dots which turn on and off in the same phase are scattered on a display panel to thereby prevent flickers (display flickering). It is difficult to use this process for the purpose of solving the problem that effective dots interfere with one another, causing fringes.

The document EP-A-0261901 discloses a method of controlling a multi-gradation display device and an apparatus for performing the method. The display device comprises a matrix of bistable liquid crystal pixels (dots) arranged in 600 rows by 80 columns. The rows are time-multiplex addressed according to a predetermined sequence, each row being addressed four times for each picture period. A group of four rows is addressed simultaneously. The first and the second row of the group are spaced apart by 160 rows, the second and the third by 80 rows and the third and the fourth by 40 rows. The video signal comprises four bits for each pixel and the pixels on each of an addressed group of rows are driven in accordance with another one of these four bits, the pixels of the last row by the least significant bit and those of the first row by the most significant bit. Since for a picture each row is adressed four times at different time intervals each of the four bits, if set, determines a corresponding duration of the respective pixel being activated. Thus, if none of the four bits is set, the respective pixel will not be activated at all and if all bits are set, the pixel will be activated throughout the whole picture period. Any combination of the four pixels between these two extremes will cause the respective pixel to be activated for a corresponding fraction of the picture period.

A first object of this invention is to provide a method of controlling a multi-gradation display device capable of realizing a multi-gradation image display which is free from the above-described fringes.

A second object of this invention is to provide a multi-gradation display device which can display easily perceivable images.

These objects are achieved with a method as claimed in claim 1 and a display device as claimed in claim 6, respectively.

The present invention will become more fully understood from the detailed description given hereinbelow and the accompanying drawings which are given by way of illustration only, and thus are not to be considered as limiting the present invention.
- Figs. 1A and 1B: are views explaining effective dot matrices involved in the prior art;
- Figs. 2A - 2F: are effective dot matrices involved in the control method according to one embodiment of this invention;
- Figs. 3A - 3F: are views explaining effective dot matrices involved in the control method according to another embodiment of this invention;
- Figs. 4A and 4B: are block diagrams of an LCD as one embodiment of a display device according to the invention;
- Fig. 5: is a block diagram of element circuits of a signal electrodes driving circuit of the display device;
- Fig. 6: is a block diagram of an effective dot matrices generating circuit of the display device;
- Fig. 7: is a timing chart of the operation of the display device;
- Figs 8A - 8C: are views explaining shifts of the effective dots in the effective dot matrices of the display device; and
- Fig. 9: is a view of another example of the shifts of the effective dots in the effective dot matrices of the display device.

Figs. 2A - 2F are views explaining the LCD driving method according to an embodiment of this invention and show the sizes of respective effective dot matrices from Gradation 1, i.e., 1/8-gradation display to Gradation 6, i.e., 7/8-gradation display. The respective effective dot matrices have 8 dots in the horizontal direction. In the vertical direction Gradations 1 and 6 have 8 dots, Gradations 2 and 5 have 5 dots, and Gradations 3 and 4 have 3 dots. Letters and patterns can be gradation-displayed by making dots indicated by circles in the drawing effective in one frame, and making other dots effective in the next frame.

To be specific, for example, the eight dots of the first horizontal row indicated by the circles in Fig. 2A are set as effective dots in a first frame, in the second frame the eight dots of the bottom row are set as effective dots, and in the third frame the dots of a row of dots immediately next above the bottom row are set as effective dots. In the fourth to eighth frames the dots of the sixth to the second row, respectively, are sequentially made effective. In the ninth frame the dots of the first row are made effective as in the first frame. This occurrence is repeated. Then, in the effective dot matrix of Fig. 2A, the respective 8 x 8 = 64 dots become effective once in 8 frames. Accordingly a 1/8 gradation display can be made.

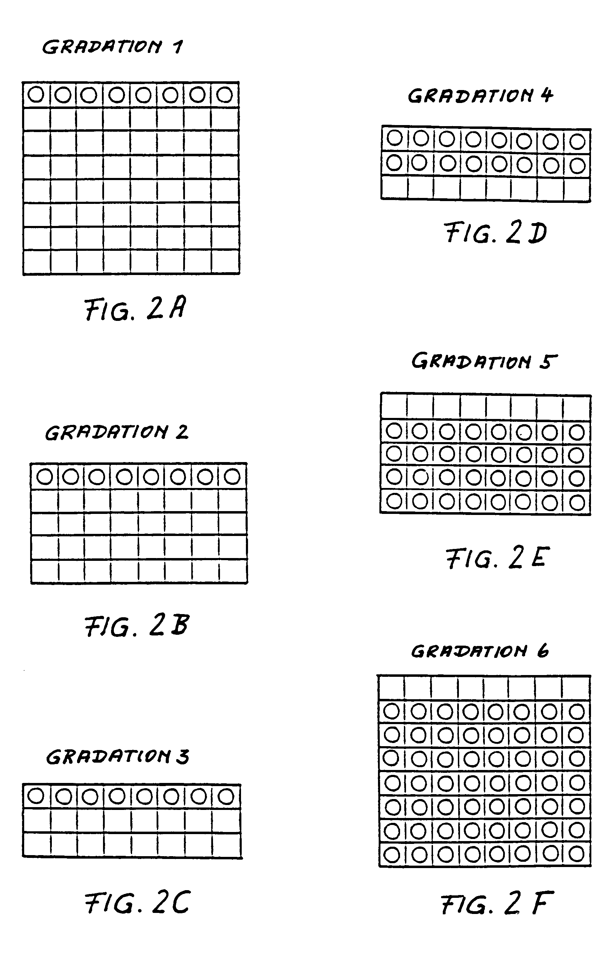

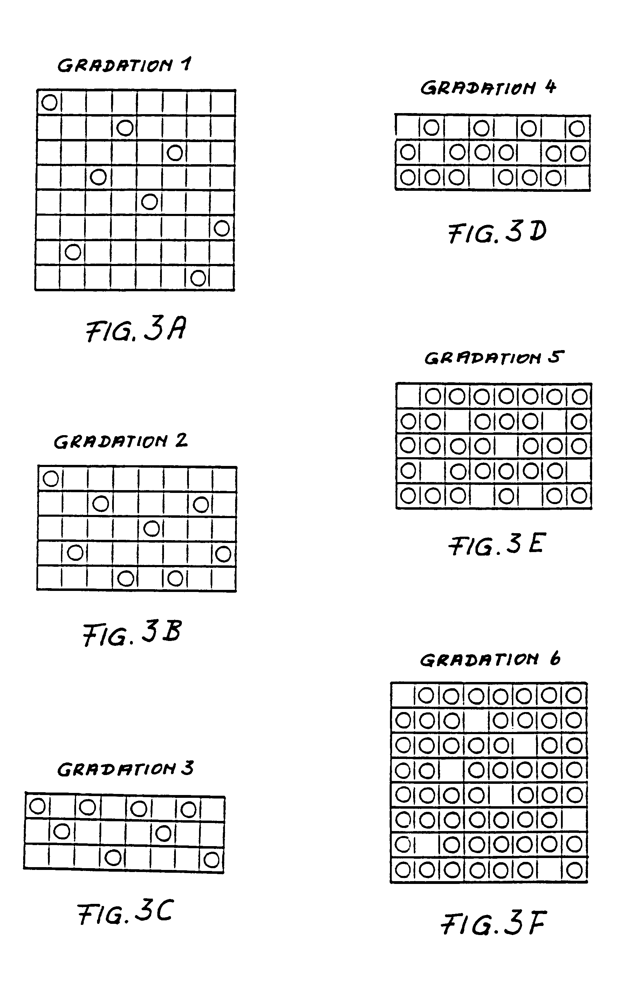

Fig. 3 shows a modification of the embodiment. In this modification as well as the embodiment of Fig. 2, effective dot matrices of different sizes are set for different gradations as in the first embodiment of Fig. 2. But this modification is different from the first embodiment in that in the former the effective dots in the respective frames are scattered in the effective dot matrices. That is, the effective dots of the respective frames are scattered substantially homogeneously both in the horizontal and the vertical directions of the effective dot matrices, and the positions of the effective dots are shifted vertically in the respective frames. Accordingly, control is conducted so that the respective dots become effective once within 8 frames for Gradation 1, once within 5 frames for Gradation 2, and once within 3 frames for Gradation 3. Control is conducted so that the respective dots become effective twice within 3 frames for Gradation 4, four times within 5 frames for Gradation 5, and 7 times within 8 frames for Gradation 6.

A characteristic of the method according to this invention is that at least either of the horizontal and the vertical sizes of an effective dot matrix is changed in accordance with a gradation of an image to be displayed. That is, when an effective dot matrix is n dots x m dots (m and n: natural numbers), at least either of m and n is a variable value in accordance with a gradation. Here it is assumed that effective dots, in one frame form a two-dimensional pattern on a display panel as an initial pattern and need K (K: a natural number) frames until the same pattern appears again, the respective dots become effective equal times in K frames. Specifically, in Fig. 3A, the respective dots become effective once within 8 frames. In Fig. 3E, the respective dots become effective four times within 5 frames. Consequently, white spots and black spots do not occur on display panel, and, in addition, homogeneous gradation displays are enabled without uneven gradations.

Accordingly it is not an essential feature of this invention to control an LCD so that a dot immediately below a dot which has become effective in one frame becomes effective in the next frame. According to this invention, effective dot matrices of different sizes are set for different gradations, and respective dots become effective equal times in a set number of frames, whereby the distribution of effective dots in a frame, and the shift of the effective dots in a next frame can be varied. In applying this invention to color displays the same method as in this embodiment is usable except that three kinds of dots, R (red), G (green) and B (blue), are turned on or not turned on. The display body is not limited to LCDs and may be EL (electroluminescence) panels, or PD (plasma display) panels as long as they display in multi-gradations by selectively turning on and not turning on a number of dots.

Next, an embodiment of the LCD control method according to this invention will be explained below in connection with an embodiment of a display device according to the invention.

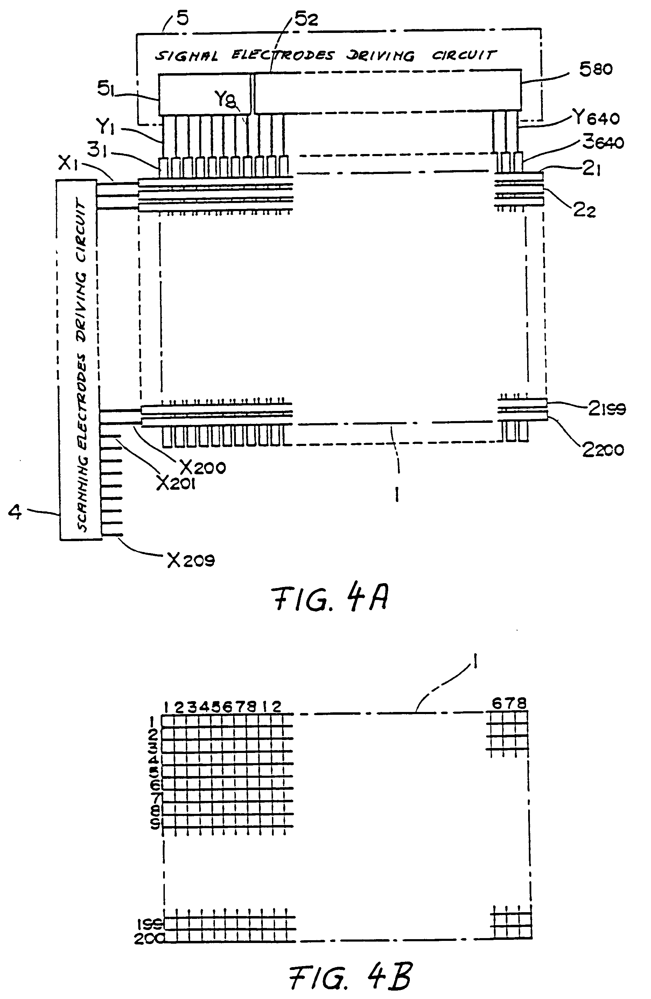

Figs. 4A and 4B contain diagrammatic views of an LCD and Fig. 4A is a diagrammatic view of the LCD, and Fig. 4B is a diagrammatic view of a dot matrix of the display body or liquid crystal panel. A display portion 1 of the liquid crystal panel is formed at a position where 200 horizontal scanning electrodes 2₁ - 2₂₀₀, and 640 signal electrodes 3₁ - 3₆₄₀ are crossed and consequently contains 200 x 640 dots. A scanning electrodes driving circuit 4 supplies horizontal scanning signals X₁ - X₂₀₀ to the scanning electrodes 2₁ - 2₂₀₀. A signal electrodes driving circuit 5 supplies data signals Y₁ - Y₆₄₀ to the signal electrodes 3₁ - 3₆₄₀. The signal electrodes driving circuit 5 comprises 80 element circuits 5₁ - 5₈₀. Each element circuit is in charge of outputting the data signals Y for a respective group of 8 dots, i.e., a first element circuit 5 outputs data signals Y₁ - Y₈, a second element circuit 5₂ outputs data signals Y₉ - Y₁₆ and so on. Thus, in the device of Fig. 4A, the signal electrodes driving circuit 5 having 80 element circuits 5₁ - 5₈₀ outputs a total of 640 data signals Y₁ - Y₆₄₀.

The scanning electrodes driving circuit 4 repeatedly outputs horizontal scanning signals sequentially from X₁ to X₂₀₉. There are no scanning electrodes 2₂₀₁ - 2₂₀₉ corresponding to the scanning signals X₂₀₁ - X₂₀₉. Accordingly the effective area of the panel, i.e., the area of the panel where an image can be displayed comprises 200 dots in the vertical direction of the panel. The display portion 1 provided by the LCD of Fig. 4A can thus be represented as in a dot matrix shown in Fig. 4B. That is, the display portion 1 has a size of 640 dots, i.e., 80 times 8-dot elements in the horizontal direction, and 200 dots in the vertical direction. In designing LCDs for image displays for practical uses in, e.g., personal computers, etc., it is preferable that two sheets of 200 dots x 640 dots panels are used to provide a 400 dots x 640 dots display body.

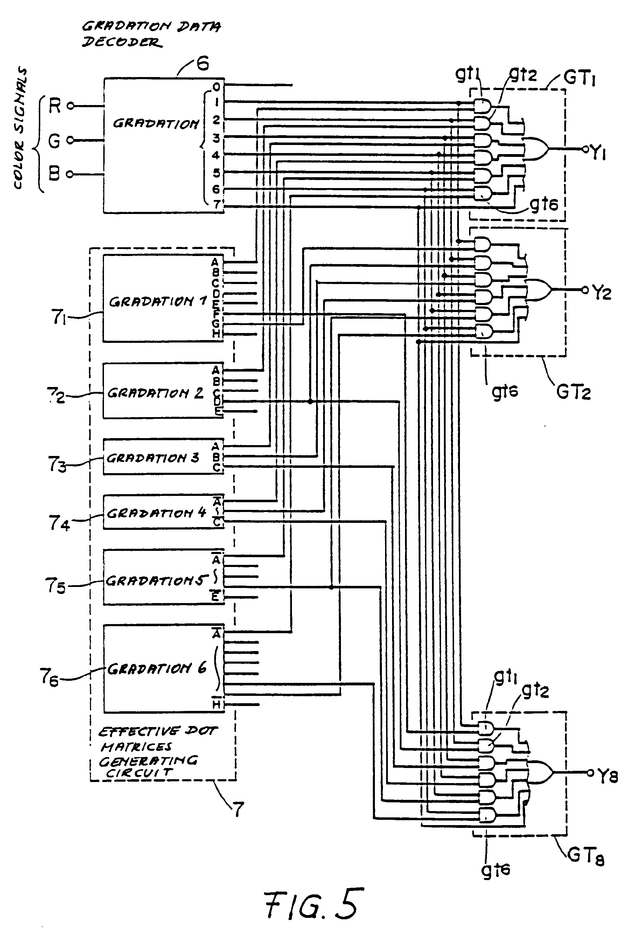

Fig. 5 shows the detailed structure of the element circuits 5 of Fig. 4A.

As seen in Fig. 5, the element circuit comprises a gradation data decoder 6, an effective dot matrices generating circuit 7, and an output gate circuit having eight gate units GT₁ - GT₈. The gradation decoder 6 decodes a color signal of 3 bits, R and G (most significant bits) and B (least significant bit) to supply an effective signal to one of output terminals 0 - 7 for outputting gradation signals, i.e., to place the output terminal in the state "1". The output terminal for Gradation 0 is open, and when the gradation is 0, the data signals Y₁ - Y₈ are always 0. The output terminal for Gradation 7 is directly connected to an OR gate of the output gate circuit, and when the gradation is 7, the data signals Y₁ - Y₈ are always "1", i.e., effective. For Gradations 1 - 6, lighting control for the respective dots is required. The effective dot matrices generating circuit 7 conducts this control.

The effective dot matrices generating circuit 7 has effective dot matrix generating circuit units 7₁ - 7₆ for the respective gradations which generate effective dot matrices for Gradations 1 - 6, and output signals from the terminals indicated by A - H, A̅ - H̅ are supplied to the output gate circuit. The eight gate units GT₁ - GT₈ of the output gate circuit correspond to the data signals Y₁ - Y₈. The respective gate units GT₁ - GT₈ are supplied with gradation outputs from the gradation data decoder 6 and output signals from the A - H output terminals and the A̅ - H̅ output terminals of the effective dot matrices generating circuit 7. When the output signals of the output terminals A - H and A̅ - H̅ are "1", effective dot signals are obtained.

An output for Gradation 1 of the gradation data decoder 6 is supplied to an AND gate gt₁ of the respective gate units GT₁ - GT₈, an output for Gradation 2 to an AND gate gt₂, an output for Gradation 3 to an AND gate gt₃, ...., and an output for Gradation 6 to an AND gate gt₆ of the respective gate units GT₁ - GT₈. The outputs A - H of the effective dot matrix generating unit 7₁ for Gradation 1 are supplied to the AND gates gt₁ of the respective gate units GT₁ - GT₈ in the sequential order of 1, 4, 6, 3, 5, 8, 2, 7 from the top as indicated in Fig. 5. In other words, the outputs of the output terminals A - H of the effective dot matrix generating circuit 7₁ are supplied to the respective AND gates in combinations of A = GT₁, B = GT₄, C = GT₆, D = GT₃, E = GT₅, F = GT₈, G = GT₂ and H = GT₇. The outputs of the output terminals A - E of the effective dot matrix generating unit 7₂ for Gradation 2 are supplied to the respective AND gate units gt₂ in combinations of A = GT₁, B = GT₃, GT₇, C = GT₅, D= GT₂, GT₈ , E = GT₄, GT₆. The outputs of the output terminals A - C of the effective dot matrix generating unit 7₃ for Gradation 3 are supplied to the respective AND gate units gt₃ in combinations of A = GT₂, GT₃, GT₇, B = GT₂, GT₆, C = GT₄, GT₈. The outputs for Gradation 4 are supplied in the same combinations as for Gradation 3. Those for Gradation 5 are supplied in the same combinations as for Gradation 2. Those for Gradation 6 are supplied in the same combinations as for Gradation 1. The outputs of the output terminals A̅ - H̅ are supplied to the gate units GT₁ - GT₈. For example, the outputs of the output terminals A̅ - H̅ are supplied to the AND gates gt₆ of the respective gate units GT₁ - GT₈ in the sequential order of 1, 4, 6, 3, 5, 8, 2, 7 from the top. These input combinations determine distributions of effective dots in the horizontal and the vertical directions as shown in Fig. 3.

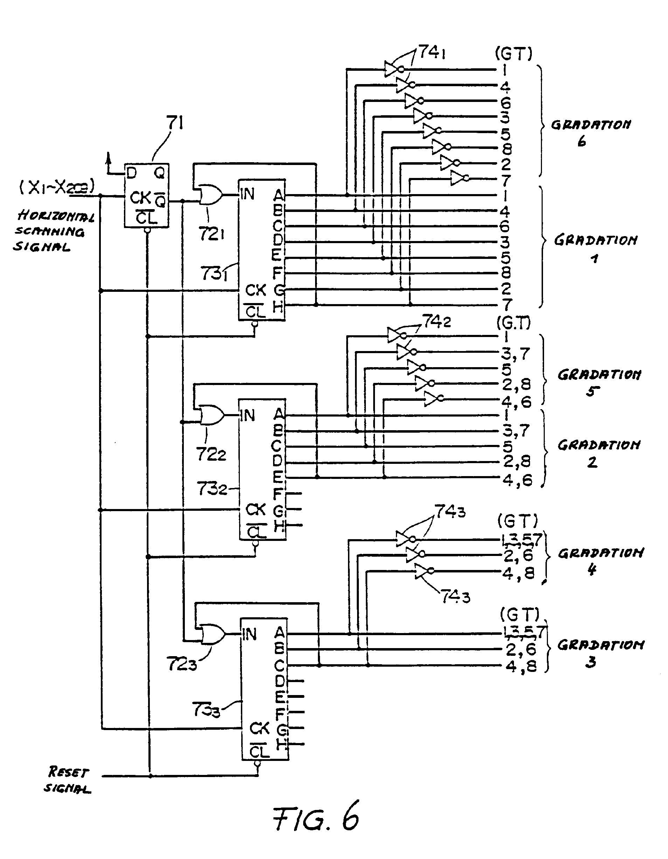

Fig. 6 shows in more detail the effective dot matrices generating circuit 7.

As shown, the effective dot matrices generating circuit 7 comprises a D-flip-flop 71, three OR gates 72₁ - 72₃ for receiving an output Q̅ of the D-flip-flop 71, three shift registers 73₁ - 73₃ each having an input terminal IN and eight output terminals corresponding to the output terminals A - H, and totally sixteen inverters 74₁ - 74₃. The effective dot matrices generating circuit 7 is characterized in that the output terminal H of the shift register 73₁ is connected to the OR gate 72₁ so that eight signal outputs of the output terminals A - H are repeated many times. The output terminal E of the shift register 73₂ is connected to the OR gate 72₂ so that 5 signal outputs of the output terminals A - E are repeated many times. The output terminal C of the shift register 73₃ is connected to the OR gate 72₃ so that 3 output signals of the output terminal A - C are repeated many times. The circuit 7 is also characterized in that the inverters 74₁ - 74₃ are provided on the output side of the shift registers 73₁ - 73₃, which are respectively used commonly by circuits for Gradations 1 and 6, commonly by those for Gradations 2 and 5, and commonly by those for Gradations 3 and 4. Thus, the output terminals of the shift register 73₁ supply 8 effective signals of the output terminals A - H for Gradation 1, and by passing the 8 effective signals A - H through the inverter 74₁, 8 effective signals A̅ - H̅ for Gradation 6 are obtained. Similarly from the output terminals of the shift register 73₂, 5 effective signals A - E for Gradation 2 are obtained, from the output terminals of the shift register 73₃, effective signal A - C are obtained, and by passing the 5 effective signals through the inverters 74₂, 74₃, effective signals A̅ - E̅ for Gradations 5 and effective signals A̅ - C̅ for Gradation 4 are obtained.

In this embodiment, as described above, a 640 dots x 200 dots liquid crystal panel is used. Effective dot matrices are repeated 80 times in the horizontal direction. When a repetition cycle on turning of the dots in the vertical direction i.e., a repetition cycle of a horizontal scanning line, is a multiple of 8, 5 and 3 which are vertical sizes of the effective dot matrices, positions of the effective dots are fixed in every frame. Therefore, the scanning line has to be repeated in a cycle other than the above-described multiples and larger than 200. That is, it is necessary that a vertical scanning signal is outputted every certain number of horizontal scanning signals, such as 202, 203, 206, 209, 211, 213, etc. But since more than 201 horizontal scannings are wasteful in the image display, it is preferable that the repetition cycle number is as small as possible.

In this embodiment, when the horizontal scanning signal has been outputted 209 times, that is, the horizontal scanning signal X₂₀₉ is outputted, the vertical scanning signal is outputted, and then the horizontal scanning signal returns to the horizontal scanning signal X₁. It takes principally the least common multiple, or 8 x 5 x 3 frames = 120 frames for an effective dot distribution pattern to return to its initial pattern. In contrast to this, conventionally 8 dots x 8 dots effective dot matrices are set for respective gradations, and accordingly effective dots interfere with one another in every frame. But in this invention, the interferences are lessened to once 120 frames, with a result that gradation display is made more effective.

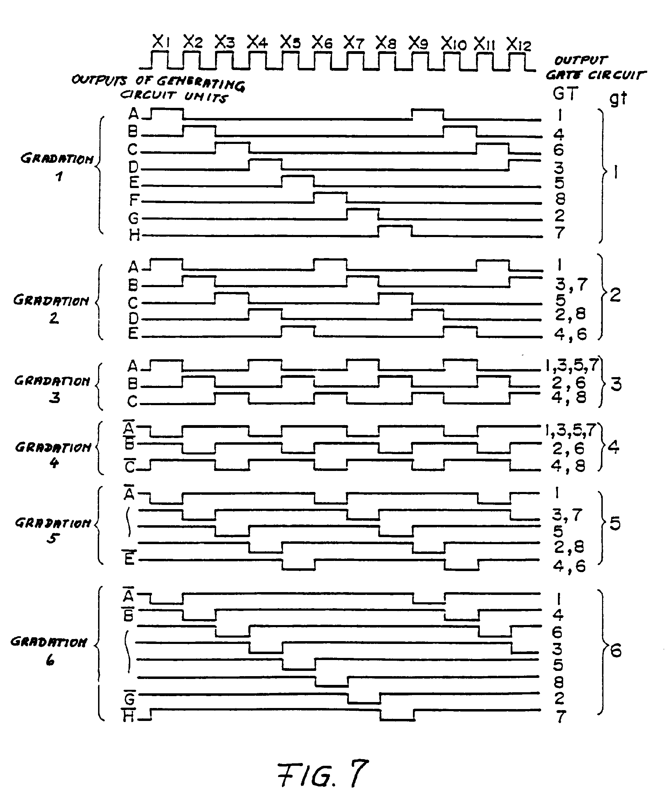

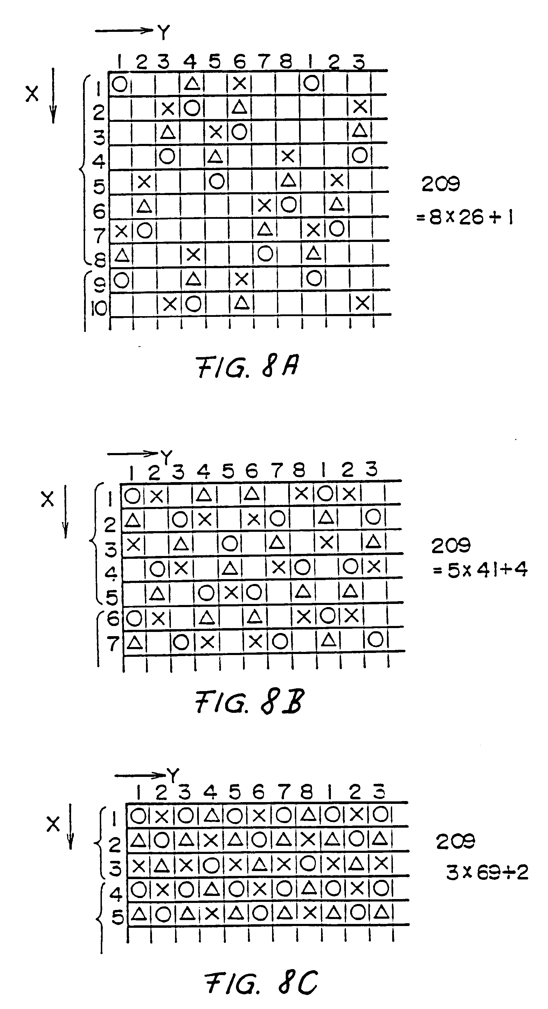

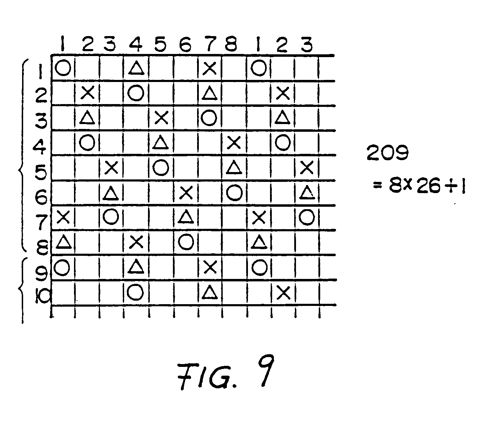

Next, the operation of the embodiment of Figs. 4 - 6 will be explained with reference to Figs. 7 and 8.

Fig. 7 is a timing chart of the operation of the above-described LCD. In Fig. 7, A - H and A̅ - H̅ represent output terminals of the effective dot matrix generating units 7₁ - 7₆ of Fig. 5 for generating effective dot matrices, and correspond to the output terminals of the shift registers 73₁ - 73₃, and to the output terminals of the inverters 74₁ - 74₃. When the output terminals A - H and A̅ - H̅ are in the state "1", effective signals for lighting dots are obtained. X₁ - X₁₂ represent horizontal scanning signals. This timing chart shows that the shift registers 73₁ - 73₃ are reset to shift the outputs of the effective signals sequentially from A -> B -> C -> .. every time a horizontal scanning signal is supplied to their respective terminals CK.

Fig. 8 shows effective dots obtained when the circuits of Fig. 4 - 6 are operated based on the signals of Fig. 7. Fig. 8A is for Gradation 1, Fig. 8B is for Gradation 2, and Fig. 8C is for Gradation 3. In Fig. 8, the circles indicate effective dots in a first frame, the triangles indicate effective dots in a following second frame, and the crosses indicate effective dots in a third frame following the second one.

First, when the horizontal scanning signals X₁ - X₈ are sequentially outputted as shown in Fig. 7, the output terminals A - H of the effective dot matrix generating unit 7₁ for Gradation 1 become sequentially "1", i.e., have an effective signal. Then, since the output terminals A - H are connected to the respective gate units GT₁ - GT₈ in the sequential order of 1, 4, 6, 3, 5, 8, 2, 7 from the top as shown in Fig. 6, the effective dots are at X = 1 - 8, Y = 1, 4, 6, 3, 5, 8, 2, 7 as indicated by the circles in Fig. 8A. This operation is repeated. As shown in Fig. 4A, the scanning electrodes driving circuit 4 has output terminals for the horizontal scanning signals X₁ - X₂₀₉, but the display body 1 has only 200 scanning electrodes 2₁ - 2₂₀₀. Accordingly, the 8 dots x 8 dots effective dot matrix for Gradation 1 is repeated 26 times a frame. In the next frame, the effective dots are shifted by one dot as indicated by the triangles in Fig. 8A, and in the frame after the next frame the effective dots are shifted further by one dot as indicated by the crosses in Fig. 8A. This is understood from the calculation 209 = 8 x 26 + 1.

This explanation is for an 8 dots x 8 dots effective dot matrix for Gradation 1. For Gradation 2, the effective dot matrix is 8 dots x 5 dots. Accordingly the effective dot matrix is repeated 41 times a frame. In the next frame, effective dots are shifted by 4 dots as indicated by the triangles in Fig. 8B, and in the frame following said next frame the effective dots are further shifted by 4 dots as indicated by the crosses in Fig. 8B. This is understood from the calculation 209 = 5 x 41 + 4. The effective dot matrix for Gradation 3 is repeated 69 times a frame. In the next frame, the effective dots are shifted by 2 dots as indicated by the triangles in Fig. 8C, and in the frame following said next frame the effective dots are further shifted by 2 dots as indicated by the crosses in Fig. 8C. This is understood from the calculation 209 = 3 x 69 + 2.

In this embodiment, as shown in Fig. 7, effective dots are scattered in the horizontal and the vertical directions, are positioned at some places along the vertical and the horizontal lines, and are adjacent to one another in neither one frame nor a next frame. Consequently the fringe phenomenon becomes less conspicuous, and the interference is lessened. Gradation display is made much more effective.

Fig. 9 shows another example explaining the same effect of Fig. 8A. The outputs of the output terminals A - H of the shift registers 72₁ - 72₃ are distributed in the horizontally sequential order of 1, 4, 7, 2, 5, 8, 3, 6. In this case as well, effective dots are not adjacent to one another in one frame, and in a next frame they do not become adjacent to one another.

In the above-described embodiment, the driving circuits are in positive logic but can attain the same advantageous effect in negative logic.

## Claims

1. A method of controlling a multi-gradation display device comprising a matrix of dots arranged in rows and columns substantially orthogonal to each other, wherein a displayed image is formed in N successive frames and in each frame the dot matrix is scanned once, row by row, with the dots in the currently scanned row selectively activated or not activated,
said method comprising:
a) receiving a video signal representing said image,
b) deriving gradation information from the video signal,
c) generating for several gradations a respective gradation mask pattern dividing said dot matrix into two-dimensional submatrices of effective dots and non-effective dots with the positions of the effective dots in each submatrix cyclically changed every frame such that each dot in each submatrix becomes effective N/M times per N frames, where M is a natural number different for each gradation mask pattern, and
d) selecting the gradation mask pattern in accordance with said gradation information and activating selected ones of the effective dots, based on the video signal, while the dot matrix is scanned,
wherein the size of the submatrices of one gradation mask pattern differs in the row and/or column direction from that of the submatrices of at least one other gradation mask pattern.

2. The method according to claim 1, wherein the submatrices of at least two of said gradation mask patterns comprise three rows, those of at least two others five rows and those of at least two further ones eight rows.

3. The method according to claim 1 or 2, wherein in said submatrices, each dot in one or more rows is an effective dot while each dot in the remaining rows is a non-effective dot.

4. The method according to claim 1 or 2, wherein the positions of effective dots in said submatrices are scattered in the row and column directions such that the possibility of an effective dot in one frame being adjacent to an effective dot in the preceding or following frame is minimized.

5. The method according to any one of the preceding claims, wherein the positions of the effective dots in the submatrices are shifted every frame by a predetermined number of dot positions in a predetermined one of said row and column directions.

6. A multi-gradation display device comprising:
a display panel having a plurality of signal electrodes (3₁-3₆₄₀) parallel with each other and a plurality of scanning electrodes (2₁-2₂₀₀) parallel with each other and substantially orthogonal to the signal electrodes, the crossing points of said electrodes defining a matrix of dots for displaying an image,
scanning electrodes driving means (4) for supplying, during each frame, scanning signals to the respective scanning electrodes in a sequential order, wherein each picture comprises N frames,
means for receiving a video signal representing said image,
signal electrodes driving means (5) for supplying, in response to said video signal, data signals to the respective signal electrodes,
wherein the signal electrodes driving means (5) comprises:
means (6) for deriving gradation information from the video signal,
means (7) for generating for several gradations a respective gradation mask pattern dividing said dot matrix into two-dimensional submatrices of effective dots and non-effective dots with the positions of the effective dots in each submatrix cyclically changed every frame such that each dot in each submatrix becomes effective N/M times per N frames, where M is a natural number different for each gradation mask pattern, and
gate means (GT₁ - GT₈) for selecting the gradation mask pattern in accordance witn said gradation information and activating selected ones of the effective dots, based on the video signal, while the dot matrix is scanned,
wherein the size of the submatrices of one gradation mask pattern differs in the row and/or column direction from that of the submatrices of at least one other gradation mask pattern.

7. The display according to claim 6, wherein the scanning electrodes driving means (4) has a higher number of scanning signal output terminals than the number of scanning electrodes (2₁-2₂₀₀).

8. The display according to claim 7, wherein the difference between the number of scanning electrodes (2₁-2₂₀₀) and the number of scanning signal output terminals of the scanning electrodes driving means (4) is neither equal to nor an even number multiple of the number of dots of any of said submatrices in the direction of the scanning electrodes.

## Patentansprüche

1. Verfahren zur Steuerung einer Multigradationsanzeigevorrichtung umfassend eine Matrix von in Zeilen und Spalten, die im wesentlichen orthogonal zueinander sind, angeordneten Punkten, wobei ein Anzeigebild in N aufeinanderfolgenden Rahmen gebildet wird und in jedem Rahmen die Punktmatrix Zeile für Zeile einmal abgetastet wird, wobei die Punkte in der gerade abgetasteten Zeile selektiv aktiviert oder nicht aktiviert werden,
wobei das Verfahren umfaßt:
a) Empfangen eines das Bild repräsentierenden Videosignals,
b) Ableiten von Gradationsinformation aus dem Videosignal,
c) Erzeugen eines jeweiligen Gradationsmaskenmusters für mehrere Gradationen, die die Punktmatrix in zweidimensionale Submatrizen von effektiven Punkten und nicht-effektiven Punkten unterteilen, wobei die Positionen der effektiven Punkte in einer Submatrix mit jedem Rahmen zyklisch geändert wird, derart, daß jeder Punkt in jeder Submatrix pro N Rahmen N/M mal effektiv wird, wobei M eine natürliche Zahl ist, die für jedes Gradationsmaskenmuster verschieden ist, und
d) Auswählen des Gradationsmaskenmusters nach Maßgabe der Gradationsinformation und Aktivieren von auf der Basis des Videosignals ausgewählten der effektiven Punkte, während die Punktmatrix abgetastet wird,
wobei die Größe der Submatrizen eines Gradationsmaskenmusters sich in Zeilen- und/oder Spaltenrichtung von der der Submatrizen wenigstens eines anderen Gradationsmaskenmusters unterscheidet.

2. Verfahren nach Anspruch 1, bei dem die Submatrizen von wenigstens zwei der Gradationsmaskenmuster drei Zeilen umfassen, jene von wenigstens zwei anderen fünf Zeilen und jene von wenigstens zwei weiteren acht Zeilen.

3. Verfahren nach Anspruch 1 oder 2, bei dem in den Submatrizen jeder Punkt in einer oder mehreren Zeilen ein effektiver Punkt ist, während jeder Punkt in den übrigen Zeilen ein nicht-effektiver Punkt ist.

4. Verfahren nach Anspruch 1 oder 2, bei dem die Positionen der effektiven Punkte in den Submatrizen in Zeilen- und Spaltenrichtung so verstreut sind, daß die Möglichkeit, daß ein effektiver Punkt in einem Rahmen einem effektiven Punkt im vorangehenden oder folgenden Rahmen benachbart ist, minimal wird.

5. Verfahren nach einem der vorhergehenden Ansprüche, bei dem die Positionen der effektiven Punkte in den Submatrizen mit jedem Rahmen um eine vorbestimmte Anzahl von Punktpositionen in einer vorbestimmten der Zeilen- und Spaltenrichtungen verschoben wird.

6. Multigradationsanzeigevorrichtung umfassend:
eine Anzeigetafel mit einer Vielzahl von zueinander parallelen Signalelektroden (3₁-3₆₄₀) und einer Vielzahl von zueinander parallelen und zu den Signalelektroden im wesentlichen orthogonalen Abtastelektroden (2₁-2₂₀₀), wobei die Kreuzungspunkte der Elektroden eine Matrix von Punkten zur Anzeige eines Bildes bilden,
Abtastelektrodentreibermittel (4) zur Lieferung von Abtastsignalen an die jeweiligen Abtastelektroden in sequentieller Reihenfolge während jedes Rahmens, wobei jedes Bild N Rahmen umfasst,
Mittel zum Empfang eines das Bild repräsentierenden Videosignals,
Signalelektrodentreibermittel (5) zur Lieferung von Datensignalen an die jeweiligen Signalelektroden als Antwort auf das Videosignal,
wobei die Signalelektrodentreibermittel (5) umfassen:
Mittel (6) zur Ableitung von Gradationsinformation aus dem Videosignal,
Mittel (7) zur Erzeugung eines jeweiligen Gradationsmaskenmusters für verschiedene Gradationen, das die Punktmatrix in zweidimensionale Submatrizen von effektiven Punkten und nicht-effektiven Punkten unterteilt, wobei die Positionen der effektiven Punkte in jeder Submatrix zyklisch mit jedem Rahmen geändert werden derart, daß jeder Punkt in jeder Submatrix pro N Rahmen N/M mal effektiv wird, wobei M eine natürliche Zahl ist, die für jedes Gradationsmaskenmuster verschieden ist, und
Gattermittel (GT₁-GT₈) zur Auswahl der GradationsMaskenmuster nach Maßgabe der Gradationsinformation und zum Aktivieren von auf der Basis des Videosignals ausgewählten der effektiven Punkte, während die Punktmatrix abgetastet wird,
wobei die Größe der Submatrizen eines Gradationsmaskenmusters in der Zeilen- und/oder Spaltenrichtung von der der Submatrizen wenigstens eines anderen Gradationsmaskenmusters verschieden ist.

7. Anzeigevorrichtung nach Anspruch 6, bei der die Abtastelektrodentreibermittel (4) eine größere Anzahl von Abtastsignalausgangsanschlüssen aufweist als die Anzahl von Abtastelektroden (2₁-2₂₀₀).

8. Anzeigevorrichtung nach Anspruch 7, bei der die Differenz zwischen der Anzahl von Abtastelektroden (2₁-2₂₀₀) und der Anzahl von Abtastsignalausgangsanschlüssen der Abtastelektrodentreibermittel (4) der Anzahl von Punkten irgendeiner der Submatrizen in Richtung der Abtastelektroden weder gleich ist noch ein gradzahliges Vielfaches davon ist.

## Revendications

1. Procédé pour commander un dispositif d'affichage à gradations multiples comprenant une matrice de points agencés en lignes et en colonnes sensiblement orthogonales les unes aux autres, caractérisé en ce qu'une image affichée est mise sous forme de N trames successives et en ce que, dans chaque trame, la matrice de points est balayée une fois, ligne par ligne, les points d'une ligne en cours de balayage étant sélectivement activés ou non activés,
ledit procédé consistant à:
a) recevoir un signal vidéo représentant ladite image,
b) déduire une information de gradation du signal vidéo,
c) produire, pour plusieurs gradations, un motif de masque de gradation respectif divisant ladite matrice de points en des sous-matrices bidimensionnelles de points efficaces et de points non-efficaces, les positions des points efficaces de chaque sous-matrice étant modifiées cycliquement au cours de chaque trame de façon que chaque point de chaque sous-matrice devienne efficace N/M fois toutes les N trames, où M est un entier naturel différent pour chaque motif de masque de gradation, et
d) sélectionner le motif de masque de gradation en fonction de ladite information de gradation et activer ceux des points efficaces qui sont sélectionnés en fonction du signal vidéo, pendant le balayage de la matrice de points,
la taille des sous-matrices d'un motif de masque de gradation étant différente dans la direction des lignes et/ou des colonnes de celle des sous-matrices d'au moins un autre motif de masque de gradation.

2. Procédé selon la revendication 1, dans lequel les sous-matrices d'au moins deux desdits motifs de masques de gradation comprennent trois lignes, celles d'au moins deux autres motifs, comprennent cinq lignes, et celles d'au moins deux autres motifs, comprennent huit lignes.

3. Procédé selon la revendication 1 ou 2, dans lequel, dans lesdites sous-matrices, chaque point appartenant à une ou plusieurs lignes est un point efficace alors que chaque point appartenant aux lignes restantes est un point non efficace.

4. Procédé selon la revendication 1 ou 2, dans lequel les positions des points efficaces dans lesdites sous-matrices sont dispersées dans les directions des lignes et des colonnes de façon que la possibilité qu'un point efficace d'une trame soit adjacent à un point efficace de la trame précédente ou suivante, soit minimisée.

5. Procédé selon l'une quelconque des revendications précédentes, dans lequel les positions des points efficaces dans les sous-matrices sont décalées d'un nombre prédéterminé de positions de points lors de chaque trame dans l'une prédéterminée desdites directions des lignes et des colonnes.

6. Dispositif d'affichage à gradations multiples comprenant:
un panneau afficheur comportant plusieurs électrodes de signaux (3₁- 3₆₄₀) parallèles les unes aux autres et plusieurs électrodes de balayage (2₁-2₂₀₀) parallèles les unes aux autres et sensiblement orthogonales aux électrodes de signaux, les points d'intersection desdites électrodes définissant une matrice de points permettant d'afficher une image,
un moyen (4) d'excitation d'électrodes de balayage pour fournir, pendant chaque trame, des signaux de balayage aux électrodes de balayage respectives, dans un ordre séquentiel, chaque image comprenant N trames,
un moyen pour recevoir un signal vidéo représentant ladite image,
un moyen (5) d'excitation d'électrodes de signaux pour fournir, en réponse audit signal vidéo, des signaux de données aux électrodes de signaux respectives,
le moyen (5) d'excitation d'électrodes de signaux comprenant:
un moyen (6) pour déterminer une information de gradation à partir du signal vidéo,
un moyen (7) pour produire, pour plusieurs gradations, un motif de masque de gradation respectif divisant ladite matrice de points en sous-matrices bidimensionnelle de points efficaces et de points non-efficaces, les positions des points efficaces dans chaque sous-matrice étant modifiées cycliquement lors de chaque trame de façon que chaque point de chaque sous-matrice devienne efficace N/M fois toutes les N trames, où M est un entier naturel différent pour chaque motif de masque de gradation, et
un moyen à portes (GT₁ - GT₈) pour sélectionner le motif de masque de gradation en fonction de ladite information de gradation et activer ceux qui sont sélectionnés des points efficaces, sur la base du signal vidéo, pendant le balayage de la matrice de points,
la taille des sous-matrices d'un motif de masque de gradation étant différente dans la direction des lignes et/ou des colonnes de celle des sous-matrices d'au moins un autre motif de masque de gradation.

7. Affichage selon la revendication 6 dans lequel le moyen (4) d'excitation des électrodes de balayage comporte un nombre de bornes de sortie de signaux de balayage supérieur au nombre d'électrodes de balayage (2₁ - 2₂₀₀).

8. Affichage selon la revendication 7, dans lequel la différence entre le nombre d'électrodes de balayage (2₁ - 2₂₀₀) et le nombre de bornes de sortie de signaux de balayage du moyen (4) d'excitation des électrodes de balayage n'est ni égale au nombre de points de l'une quelconque des sous-matrices dans la direction des électrodes de balayage, ni un multiple de celui-ci.
